# EUROPEAN PATENT APPLICATION

(11) **EP 3 338 543 A1**
(43) Date of publication of application: **27.06.2018**
(21) Application number: 17208473.3
(22) Date of filing: 19.12.2017
(51) Int. Cl.: A01K 5/02

(54) **FEEDING METHOD OF DAIRY COWS WITH SPECIAL DOSAGE OF FEED AND A DEVICE PERFORMING THE SAID METHOD**

(30) Priority: 23.12.2016 SI 201600308
(71) Applicant: Ferlan, Alojz, 1000 Ljubljana (SI)
(72) Inventor: Ferlan, Alojz, 1000 Ljubljana (SI)
(74) Representative: Flak, Antonija

(57) **Abstract**

The present invention belongs to the field of devices for feeding animals, more precisely to the field of automatic devices for feeding animals.

The feeding method of dairy cows is characterized in that it includes a pre-prepared list of identification (ID) numbers for each cow, an entry of nutritional needs for each ID number, dosage of feed into a feeding cart and delivery of prepared feed to a bowl equipped with an ID number reader, where a cow with this ID number stands. According to the method a robot measures each type of feed from containers into a feeding cart, based on the information for each cow with its ID number entered into a computer.

## Description

### Field of the invention

The present invention belongs to the field of devices for feeding animals, more precisely to the field of automatic devices for feeding animals.

### The technical problem

The technical problem, which is solved by the present invention, is how to ensure that each individual cow in a herd receives a suitable combination of feed, which will be based on the amount of corn or grain silage in comparison to the amount of strong feed and at a different place long-fibre feed such as hay, straw, grass silage and similar available at all times. The amount ratio in a meal depends on the cow, whether it has usual needs or is an early-lactation cow or has some metabolic disorders. The purpose and aim of the invention is design of a system and a device for feeding animals, preferably cows, which will enable feeding animals with food adapted to their needs without the need to join cows with same needs into special groups.

Cattle breeding is faced with a problem of optimization of animal feeding with regards to their specific needs. For example, a cow few days after calving has different needs than other, lactation cows. Further, a cow with metabolic disorders has different needs if compared to healthy cows or early-lactation cows. Therefore, some breeders form groups of cows after calving and others divided into groups based on their needs.

In case of machine feeding cows are held inside a fence and receive a mixed feed in combination of basic feed, such as hay, straw, grass silage, corn silage and similar, with strong feed, such as crushed cereals, corn, wheat, soya, peas, corn gluten, dried brewer's grains and similar. If all cows are within one group, some of them receive too much basic feed, while others receive too much strong feed. Because the ratio of basic vs. strong feed is important with regards to needs of each cow, it is essential to determine the needs of each cow and provide them with the most suitable combination of feed. In order to keep cows healthy and to ensure optimal milk production they must receive and eat an appropriate mix of basic and strong feed each day. The needs of a cow can vary between days, in particular after calving. Time periods between feeding times are also of significant importance, so a system or a feeding method must also determine suitable periods in-between meals.

Cows depending on their lactation status need different food, so that their optimal lactation, health and life expectancy can be maintained. In addition to the basic feed they need the so called strong feed, which has to be adjusted with regards to the needs. Regardless of whether feeding is performed manually or automatically, each meal has to be balanced. A problem of manual feeding is length of the procedure, large energy consumption and impaired tracking of what and how much each cow ate.

For faster feeding and improved tracking several different automated systems and devices have been developed, which mix a suitable feed for a particular group of cows based on their lactation status and distribute the prepared feed to cows. The problem is that the cows have to be divided into groups based on their lactation, but this is hard to maintain. Furthermore, moving cows from one group to another represents significant stress for them, as they are used to their own group and each adaptation to a new group could result in impaired lactation, metabolism, general health and similar. Consequently, it would be beneficial to develop a system that enables feeding cows in one uniform group composed regardless of their lactation status, so that each cow could receive meals adapted to its needs.

The technical problem is therefore how to, in addition to ensuring optimal feed composition, ensure lower energy consumption during mixing of a meal in a mixing trailer as well as automatization of feeding of smaller herds with less than 100 animals. Another problem is also how to decrease the stress for the sensitive animals in a herd, improve lactation, decrease the release of greenhouse gasses due to inappropriate feeding and omission of special rooms in which feed is prepared in a cart.

### State of the art

Patent application EP0254171 A1 describes an automatic device for feeding cows. The device is composed from several known equipment parts which can be combined and has a series distribution of them, for example a cutter for hay bales, feed mixer, conveyor belt, and transport container, which can be activated in a starting point, which ensures automatic filling at the feeding location.

Patent EP1058497 B1 discloses a device for feeding and watering animals such as cows, goats and lamas, the device being arranged with a feeder and having an imaginary vertical axis around which feeding bowls are arranged at a defined distance. Some bowls overlap, wherein each second bowl is at a different height so that it is higher than two adjacent bows. The animals are capable to distribute around the structure and to feed themselves so that they may touch one another. The bowls are essentially the same and have partition walls so that one animal does not hinder feeding of adjacent animals feeding on the adjacent bowls. At the same time one cow cannot feed in two bowls simultaneously. The number of feeders in the described structure is fourteen. Instead of overlapping bowls, these can also be arranged at different heights, so that they may have a different radius with respect to imaginary vertical axis, which results in bowls being arranged at different distances from the centre of the device.

Document EP2151160 describes a device for distribution of feed for animals, having a frame with several containers for storing feed, wherein the said containers have an outlet, a transport device for transporting the feed from storage containers to feeding bowls, wherein the transport device has guides with at least two parallel rails, on which the bowl with prepared feed is moved, the feed being supplied from the storage container. According to the invention the feeding bowls are placed one besides another, while the bowl with prepared feed moves above them and fills them with the feed. The device may also have a weighing device with which the feed is measured.

### Description of the invention

The feeding method of dairy cows with special dosage of feed includes use of a computer system with pre-prepared list of identification numbers (ID number) for each cow, a database with amount ratio between corn or cereal silage and strong feed based on nutritional needs of each cow, a container with corn or cereal silage, one or more additional containers with strong feeds, a system for measuring feed from the said containers, a mixing cart for collection and mixing of corn or cereal silage with strong feeds, the mixing cart being arranged to deliver the prepared meal to a feeding bowl with an ID number reader, where the cow with the same ID number stands. The method is carried out in such a way that:
- long-fibre feed is manually or mechanically delivered to a feeding area, or the animals have it available at all times in a bunker silo in a form of grass silage, and
- the computer system with the code reader on the feeding bowl where a cow stands, identifies the cow and searches for an entry with a meal composition, wherein the system triggers orders to measure the feed, which is delivered from containers with corn or cereal silage and from containers with strong feeds;
- the measured feed is transferred to the mixing cart based on the order from the system, wherein the cart delivers the prepared meal to the feeding bowl where the cow with the read ID number stands, the ID number being the one which triggered the whole process;
- then the computer system enters the time at which the above steps occur and the same cow does not receive another meal until a pre-set time between meals has passed.

Thereby the system enables controlled feeding of each cow.

The method according to the invention is combined. Feeding of cows with long-fibre feed in a stable can be done daily or once in few days, while the cows can be fed for example directly in a bunker silo. The method is designed so that the long-fibre feed is available at all times, while corn or cereal silage and strong feed is measured into a feeding cart based on pre-entered meal composition entered into the computer base for each cow ID number. At each feeding the cow is directed into a box where a bowl with ID number reader is located and the system delivers the meal based on the ID code of the cow. In this manner each meal portions is measured and balanced for each cow based on its needs which are linked to the cow ID number.

A feeding device assembly performing the above described feeding method of dairy cows with special dosage of feed comprises:
- a computer system with a pre-prepared list of identification numbers (ID numbers) for each cow,
- a database with amount ratio between corn or cereal silage and strong feed based on nutritional needs of each cow,
- a container with corn or cereal silage,
- one or more additional containers with strong feeds,
- a first electronic controller for allowing access to a container with corn or cereal silage,
- a second electronic controller for allowing access to one or more additional containers with strong feeds,
- a third electronic controller of a system for measuring feed from the said containers and the system for measuring feed,
- a controller of a mixing cart and a mixing cart for collection and mixing of feed and for delivering the prepared meal to at least one feeding bowl with an ID number reader, where the cow with the recognized ID number stands.

The feeding device assembly is based on the above described method and comprises the computer system, which can identify cow's ID number with the ID number reader mounted on a feeding bowl inside a fence where the cow that triggered the process stands. Entry about meal composition for the identified cow is through electronic controllers forwarded to the system for measuring feed to measure the prescribed quantities of corn or cereal silage and strong feed from the respective containers. The feed is then transferred into a mixing cart, where the feed is mixed and subsequently the cart delivers it to the feeding bowl. Corn and cereal silage may already be mixed before measuring, and grass or grass-like silage may also be added to the feed in the mixing cart. The mixing cart delivers the prepared meal to the feeding bowl where the cow with the ID number that triggered the process stands. The device includes also a timeline of feeding, which is entered into the computer system, so entry of each feeding time is enabled. In this way the same cow cannot receive a new meal until a certain time period has lapsed. The device enables controlled feeding of each cow and controlled ratio between previously mixed silage and strong feed, wherein the long-fibre feed is always available.

The feeding cart can be arranged on a rail, on which it can be driven to a container in front of feeding area. The meal from the cart is distributed into a bowl, so that a cow standing in the feeding area can eat it. State of each animal in a herd, each animal having its own identification number, is entered into the computer. Based on this information the computer searches and recognizes the feeding needs for each cow on the basis of pre-entered and saved data on needs of cows in different lactation states. In agreement with the said data each meal is determined by the computer, wherein the ratio between the basic and strong feed is given as well as the number of meals and feeding times. Each animal has an identification number, which is entered into a chip or control card that can be read by the ID number reader mounted on or in front a feeding bowl. Readers are also located in front of feeding boxes, into which cows enter.

Time periods between feedings of animals in a herd are defined and written in a computer program. If the defined time period has not yet lapsed, the system does not give the cow a new meal, even if it comes to the feeding area and triggers the method with its ID number recognition.

Cows based on their lactation status need different food, so that their optimal lactation, health and life span is maintained. A meal should be composed of basic feed such as hay, straw, grass silage, corn or cereal silage, and strong feed such as crushed cereals, corn, wheat, soy, beans, corn gluten, dried brewers grain. In addition to corn and cereal silage it is also possible to use silage of whole plants. Further to lactation status of a cow also its nutritional need can be taken into account based on needs of cows in different lactation periods recommended by the profession.

## Claims

1. A feeding device assembly for feeding dairy cows with special dosage of feed comprises:
- a computer system with a pre-prepared list of identification numbers (ID numbers) for each cow,
- a database with amount ratio between corn or cereal silage and strong feed based on nutritional needs of each cow,
- a container with corn or cereal silage,
- one or more additional containers with strong feeds,
- a first electronic controller for allowing access to a container with corn or cereal silage,
- a second electronic controller for allowing access to one or more additional containers with strong feeds,
- a third electronic controller of a system for measuring feed from the said containers and the system for measuring feed,
- a controller of a mixing cart and a mixing cart for collection and mixing of feed and for delivering the prepared meal to at least one feeding bowl with an ID number reader, where the cow with the recognized ID number stands.

2. The feeding device assembly according to claim 1, **characterized in that** it further comprises:
- a sensor for opening an entrance of a fence based on ID number of an individual cow,
- a time switch, and
- a sensor for opening an exit of the fence.

3. The feeding device assembly according to claims 1 or 2, **characterized in that** the feeding cart is arranged on a rail.

4. A feeding method of dairy cows with special dosage of feed with the feeding device assembly according to any preceding claim, the method comprising the following steps:
- long-fibre feed is manually or mechanically delivered to a feeding area, or the animals have it available at all times, for example in a sink silo in a form of grass silage, and
- the computer system with the code reader on the feeding bowl where a cow stands, identifies the cow and searches for an entry with a meal composition, wherein the system triggers orders to measure the feed, which is delivered from containers with corn or cereal silage and containers with strong feeds;
- the measured feed is transferred to the mixing cart based on the order from the system, wherein the cart delivers the prepared meal to the feeding bowl where the cow with the read ID number stands, the ID number being the one which triggered the whole process;
- then the computer system enters the time at which the above steps occur and the same cow does not receive another meal until a pre-set time between meals has passed.

5. The feeding method of dairy cows with special dosage of feed according to claim 4, **characterized in that** the system for measuring the feed releases it to a mixing cart, which mixes the feed into a meal and delivers the meal into the feeding bowl where a cow with an ID number stands that has triggered the process stands.
